## Europäisches Patentamt
## European Patent Office
## Office européen des brevets

(19)

(11) Publication number: **0 016 114**
**B1**

(12)

# EUROPEAN PATENT SPECIFICATION

(45) Date of publication of patent specification: 03.11.82

(21) Application number: 79900814.9

(22) Date of filing: 10.05.79

(86) International application number:
PCT/US79/00311

(87) International publication number:
WO 80/00069 24.01.80 Gazette 80/2

(51) Int. Cl.³: **D 02 G 3/36,** D 02 G 3/48,
B 60 C 9/10, B 60 C 5/00,
B 29 H 17/14

(54) A composite reinforcement cord for reinforcing elastomeric articles and method of making a highly stretchable radial tire.

(30) Priority: 16.06.78 US 916271
16.06.78 US 916270
16.06.78 US 916272

(43) Date of publication of application:
01.10.80 Bulletin 80/20

(45) Publication of the grant of the patent:
03.11.82 Bulletin 82/44

(84) Designated Contracting States:
DE FR GB

(56) References cited:
BE - A - 650 555
FR - A - 1 496 700
FR - A - 2 178 000
GB - A - 366 636
GB - A - 889 326
GB - A - 1 117 304
LU - A - 49 965
US - A - 2 890 567
US - A - 3 438 193
US - A - 3 486 546
US - A - 3 756 883
US - A - 3 929 180

(73) Proprietor: THE GOODYEAR TIRE & RUBBER COMPANY
1144 East Market Street
Akron. Ohio 44316 (US)

(72) Inventor: SCHMIT, Georges, Jean, Ernest
35, Allee St. Hubert
Bridel (LU)
Inventor: WELTER, Thomas, Nicholas, Hubert
65, Rue de Kehlen
Kleispelt (LU)

(74) Representative: Weyland, Joseph Jean Pierre
Goodyear International Tire Technical Center
Patent Department Avenue Gordon Smith
L-7750 Colmar-Berg (LU)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

A composite reinforcement cord for reinforcing elastomeric articles and method of making a highly stretchable radial tire

*Background of the Invention*

It is known in the prior art to provide a composite reinforcement cord for reinforcing an article. In particular, GB—A—889,326 discloses a cord comprising at least one high tenacity substantial inextensible yarn spirally wrapped around the core, the core including at least one filament which can resist and recover from tension forces on the cord at room temperatures during the first part of the processing of the cord and the elastomeric article and the complete composite cord having a reduction in initial tenacity during vulcanization of the rubber enclosed in the elastomeric article to permit stretching of the yarn to its full extent to allow elongation of elastomeric article to a predetermined amount, the yarn being maintained in a helical relationship during the first part of the process. The disadvantage of such a cord is that it is primarily limited to belt reinforcing packages which are applied near the end of the building process wherein the tire has substantially its final configuration. In applicant's invention, the cords can be provided at a much earlier point in the building process without fear of breaking the core. Additionally, the mechanism by which the core of the present invention loses its tenacity is through the high temperatures experienced during vulcanization which is in contrast to the physical breaking of the core of the British reference. The present invention is directed to a cord having a particular tenacity prior to vulcanization. Applicant's invention is characterized in that the core of the cord is composed of a polymer of a group consisting of polyolefines having at room temperature an elastic limit of at least 24,5 Newton (2.5 kilograms) and a modulus of elasticity greater than 2,2 Newton/tex (25 gr/denier) and is degradable at temperatures normally used to vulcanize rubber and at such temperatures the modulus of elasticity of said core is reduced to a low value and remains at this reduced value when the cord is cooled to lower temperatures.

It is also known from GB—A—1,117,304 to provide a stretchable tire comprising at least one carcass ply wherein the cords of the carcass ply are oriented at an angle in the range of from 75 to 90° relative to the mid-circumferential centerplane of the tire, the tire having a fluid impervious inner liner disposed within the carcass ply, a ground engaging tread portion, a pair of sidewalls surrounding each carcass ply and terminating in a pair of annular beads, at least one belt ply inner posed between said carcass ply in the tread for annular reinforcing the tire, the cords of the belt structure being disposed at angles in the range of 0° to 30° measured from the centerplane. Applicant's invention is characterized in that the cords of the carcass ply structure comprise the composite cord previously discussed. This patent does not describe a cord which would have the tensile strength required during the building process as is present in applicant's cord. The cords described in this reference are precompressed during the building process and would not provide the tensile strength as does applicant's cords. Accordingly, applicant's invention provides tensile strength during building process whereas the cord of the prior art would not. The British 1 117 304 reference also discloses the method of making a highly stretchable tire as previously discussed. Applicant's invention is characterized in that the cords used in the tire comprise the stretchable cord of applicant's invention. The method of applicant's invention provides that the cords of the carcass ply or belt ply have a certain tenacity during building process which degrades upon vulcanization. Accordingly, this tire would have the advantage as previously discussed with the highly stretchable tire or with regard to the composite cord.

*Description of the Drawing*

The following description of the invention will be better understood by having reference to the annexed drawing, wherein:

Fig. 1 is a section of an inflated tire mounted on a wheel rim, illustrating certain uses of the composite cord of the invention and the tire being shown in the deflated condition in a chain-dotted line.

Fig. 2 is a view of a composite cord made in accordance with the invention.

Fig. 3 is a diagram illustrating the thermoplastic behavior of the core of the composite cord of Fig. 2;

Fig. 4 is a stress-strain diagram od the composite cord of Fig. 2, prior to subjecting the cord to temperatures above 120°C.; and

Fig. 5 is a stress-strain diagram of the composite cord of Fig. 2, after the cord has been subjected to temperatures up to 156°C.

Fig. 6 is a section of another tire mounted on a wheel rim, the tire being in the inflated condition and made in accordance with the invention;

Fig. 7 is a section of the tire and wheel rim, of Fig. 6 illustrating the unstretched tire in the molded shape of reduced diameter mounted on the wheel rim;

Fig. 8 is a section of the tire of Fig. 6 shown in an alternative molded and vulcanized shape, prior to mounting on the wheel rim;

Fig. 9 is an enlarged fragmentary plan view of the belt plies and carcass plies of the vulcanized tire of Fig. 8 with parts being broken away to show the direction of the cords in the plies;

Fig. 10 is a cross section of yet another tire made in accordance with the invention;

Fig. 11 is a plan view of the tire of Fig. 10 with the tread removed to show the cord angle relationship between the reinforcement cords of the carcass plies, belt structure, and carcass overlay.

*Detailed Description*

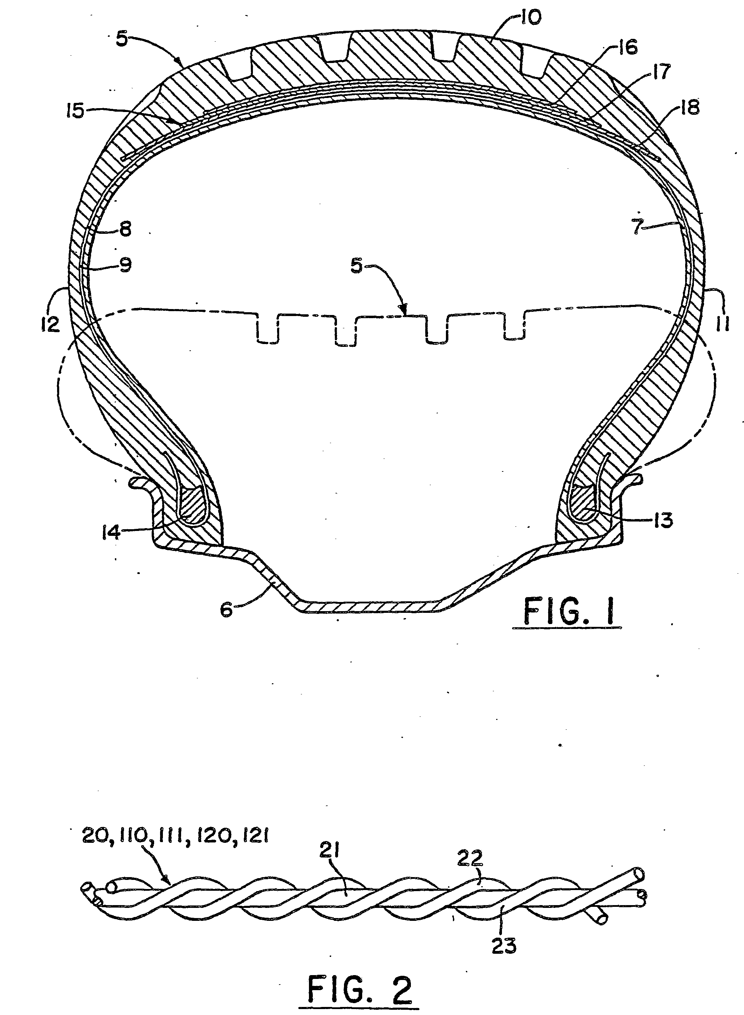

Referring more particularly to Fig. 1, there is shown a tire 5 which is mounted and inflated on a wheel rim 6. The tire 5 comprises a fluid impervious innerliner 7; at least one carcass ply 8, including a layer of reinforcement cords 9, adjacent the innerliner 7; and a tread 10 and pair of sidewalls 11 and 12 which surround the carcass ply 8 and terminate at a pair of annular metal beads 13 and 14. A belt structure 15, comprising a pair of superimposed belt plies 16 and 17 is positioned between the tread 10 and carcass ply 8 to reinforce the tire 5. A carcass overlay, or belt underlay 18, in the embodiment illustrated, is interposed between the belt structure 15 and carcass ply 8. The tire 5 is preferably of the radial type wherein the reinforcement cords 9 of the carcass ply 8 are disposed at angles of from 75 to 90 degrees measured in relation to a plane containing the mid-circumferential centerline of the tread 10, such plane hereafter referred to as the centerplane. The belt plies 16 and 17 of the tire 5 are reinforced with cords disposed at angles in the range of from 16 to 24 degrees relative to the centerplane. The cords of the belt plies 16 and 17 cross the centerplane in opposite directions. The cord angles of the belt plies 16 and 17 are the same, but lie in opposite directions from the centerplane. The cord angles are in relation to a tire which is molded, vulcanized and uninflated. The tire 5 may also be of a radial type designed to be molded with a smaller diameter than the inflated tire, shown in a chain-dotted line adjacent the wheel rim 6, which is described in further detail hereinafter.

Referring now to Fig. 2, there is shown a composite cord 20 which is utilized to reinforce various components of the tire 5, e.g. the carcass ply 8, the belt structure 15, or the carcass overlay 18. The composite cord 20 comprises a core 21 with a spiral or helical wrapping of one or more substantially inextensible yarns 22, 23.

The core 21 is of a low molecular weight polymeric material selected from the group comprising polyolefines including polyethylene and polypropylene. A particularly good core 21 was found to be a polymeric monofilament of polyethylene or polypropylene having a density in the range of from 0.9 to 1.0 grams per cubic centimeter (gr/cm³). The core 21 at room temperature may have an elastic limit of at least 24,5 N (2.5 kilograms) and preferably of at least 0,13 Newton/tex (1.5 grams per denier,) a breaking strength less than 19,6 N (20 kilograms), and an initial modulus of elasticity of at least 2,2 Newton/tex (25 grams per denier) in the load range of from 0 to 24,5 Newton (2.5 kilograms).

The core 21 is degradable at temperatures normally used to vulcanize rubber which are usually over 120°C. and in the broad range of from 120°C. to 150°C., and in the preferred narrower range of from 130°C. to 140°C. After the core 21 is subjected to these elevated temperatures, the modulus of elasticity is reduced to 0,36 Newton/Tex (4 grams per denier) or less and remains at the reduced amount when it is cooled to lower temperatures such as the outside temperatures at which a tire is used. The tenacity of the core 21 is also reduced to zero or a negligible amount of around 1 gram per denier after the core is subjected to these temperatures. It is not entirely understood but it is believed the loss in tensile strength of the core 21 results from a partial or total loss of crystalline structure to induce molecular slips upon the application of stress.

The core 21 described above consists of one filament; however, in some applications it may be desirable to have more than one filament, for example, three. The core 21 may be coated with a rubberized compound before the yarns 22,23 are wound around the core. It may also be desirable to use a stapled polymer monofilament similar to cotton filaments which is completely coated with a rubberized compound before it is incorporated into the cord 20 to provide improved adhesion with the yarns 22, 23 of the cord.

The yarns 22, 23 which are spirally wrapped in the form of helix around the core 21, may be composed of any suitable reinforcing material which is used for conventional tire reinforcement cords having a tenacity of at least 0,54 Newton/tex (6 grams per denier.) Among these materials are rayon, nylon, polyester, aramid and steel. Each of the yarns 22, 23 is formed ot at least one strand that is composed of filaments which are twisted around each other. Yarns 22, 23, composed of one strand having a denier in the range of from 800 to 1500 and helically wrapped around the core 21 in either an S- or Z-direction at a rate of from 3 to 7 turns per centimeter, were successfully used to form a good composite cord 20 which was elongatable between .50 percent and 100 percent. The yarns 22, 23 may also be composed of a plurality of strands which are cabled together, generally in a direction which is opposite that which the filaments of each strand are twisted.

*Example of a Composite Cord*

A good composite cord 20 comprises a core 21 which is a monofilament that is composed of polyethylene having a density of 0.96 gr/cm³ at room temperature of about 20—22°C.

Two substantially inextensible yarns 22, 23 are spirally wrapped around the center core 21 in opposed lay. The yarns 22, 23 are each formed of a single 166 tex (1500 denier) strand which is composed of filaments of aramid twisted together. The twist in the individual

strands or yarns 22, 23, in this case, is in a Z-direction at a rate of 2.5 turns per centimeter. The twist of the yarns 22, 23 around the core 21 is in an S-direction at a rate of 6 turns per centimeter. Due to the mutually opposed lay of the yarns 22, 23 around the core 21, the yarns 22, 23 will, during elongation of the composite cord 20 after subjecting the core 21 to a temperature used for vulcanization, twist into a single twisted cord of the type conventionally used in the reinforcement of tires.

The polyethylene monofilament core 21 of this example has the following properties at room temperature:

| | |
|---|---|
| density | 0.96 gr/cm$^3$ |
| diameter | 0.50 mm |
| breaking strength | 10 kg |
| elastic limit | 9 kg |
| Young modulus at 2.5 lg | 6,75N/tex (75 gr/dn) |
| elongation at elastic limit | 17% |
| elastic recovery at 3% elongation | 90% |
| denier | 1700 |

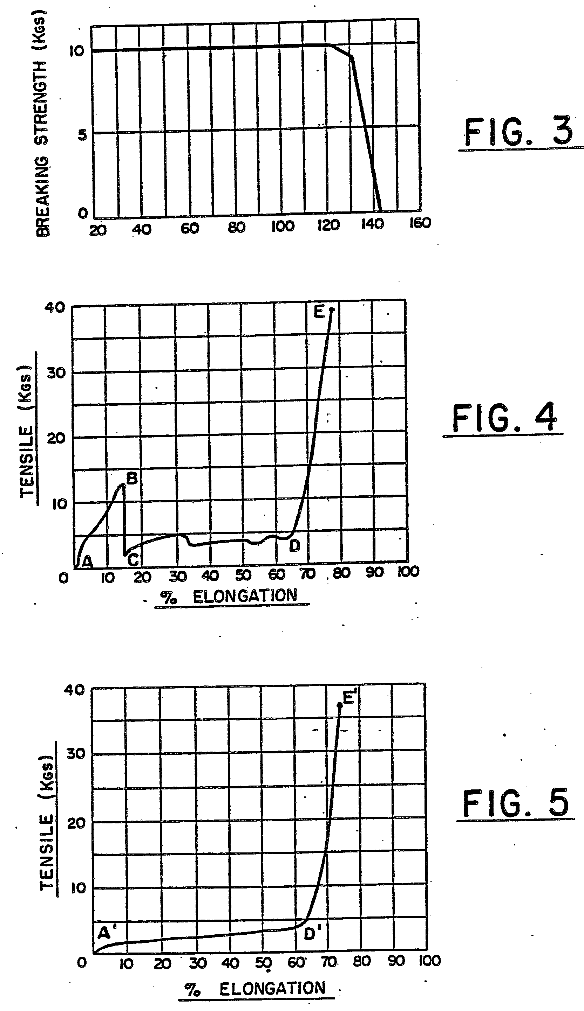

Referring to Fig. 3, the thermoplastic behavior of the polyethylene monofilament core 21 is charted as a function of the breaking strength in kilograms vs. the temperature in degrees centigrade. More specifically, Fig. 3 shows the breaking strength of the core 21, after 5 minutes of heat treatment at the respective temperatures. As can be appreciated from Fig. 3, the breaking strength of the polyethylene core 21 remains unaffected by the temperature up to about 122°C. at which temperature the breaking strength starts to decrease. By processing at higher temperatures the breaking strength of the core 21 is further reduced and at about 142°C. the breaking strength is reduced to substantially zero. Thus, it will be appreciated that the polyethylene monofilament core 21 will not lose its original tensile resistance during processing of the cord 20, if it is not subjected to temperatures above 120°C. On the other hand, it will be appreciated that the core 21, when embedded in a tire 5, will, unlike cores of the prior art cords, lose its tensile resistance during vulcanization of the tire which is normally carried out at about 150°C.

Referring now to the stress-strain diagram of Fig. 4, the cord 20 with the polyethylene monofilament core 21 passes through three phases or stages. First, there is an initial high modulus phase A—B which the cord 20 experiences as the core 21 stretches to the point where it loses its tensile resistance. Secondly, the cord 20 passes through a low modulus phase C—D where the inextensible yarns 22, 23 are stretched out and the tensile strength of the cord gradually increases. Thirdly, the cord 20 passes through the final, high modulus phase D—E where the uncoiled yarns 22, 23 are twisted and tensioned until they break at point E.

It will be appreciated that the initial region A—B forms a barrier to appreciable elongation of the cord 20 for tensiles up to around 12 kilograms. Within this barrier, the cord 20 has a high modulus and high elastic recovery. Thus, in consequence of this barrier, the cord 20 has sufficient strength to resist and recover from any tensional forces imparted to the cord during its processing or the processing of tire components reinforced with such cords, before the shaping and vulcanization of a tire composed of such components.

A typical processing of the cord 20 includes mechanical and thermal stresses, the latter being experienced by the cord as it is exposed to temperatures of from 100°C. to 120°C. to dry the cord, after it has been coated with a resorcinol formaldehyde type adhesive for promoting the bond between the cord and rubbery material used in the production of tires.

Referring now to the stress-strain diagram of Fig. 5, the same cord 20 with the polyethylene monofilament core 21 has lost its tensile resistance after it has been subjected to 15 minutes of heat treatment at 150°C. The elongation barrier A—B of the cord 20, when unheated, as seen in Fig. 4, substantially disappears. There is only a low modulus substantially linear region A'—D' corresponding to the high elongation of the cord 20 as the yarns 22, 23 stretch out, and then a high modulus phase D'—E' corresponding to the extension of the twisted yarns.

It will be understood that with the cords 20 of the present invention a relatively high elongation may be easily obtained. It takes relatively little effort or work to stretch out the cords 20 to their full extent, because the core 21 offers little or no resistance to the stretching out of the individual yarns 22, 23, of each cord after being subjected to temperatures normally used for vulcanization.

Thus, it can be appreciated that the composite tire cord 20 of the invention provides a substantial advantage over prior art composite cords in that it has an initial, elastic, high modulus elongation barrier providing sufficient resistance and recovery of the cord with respect to any processing tensions experienced by the cord before shaping and vulcanization of the tire, whereas after vulcanization of the tire, the cord has no such barrier and may be elongated with a minimum of effort.

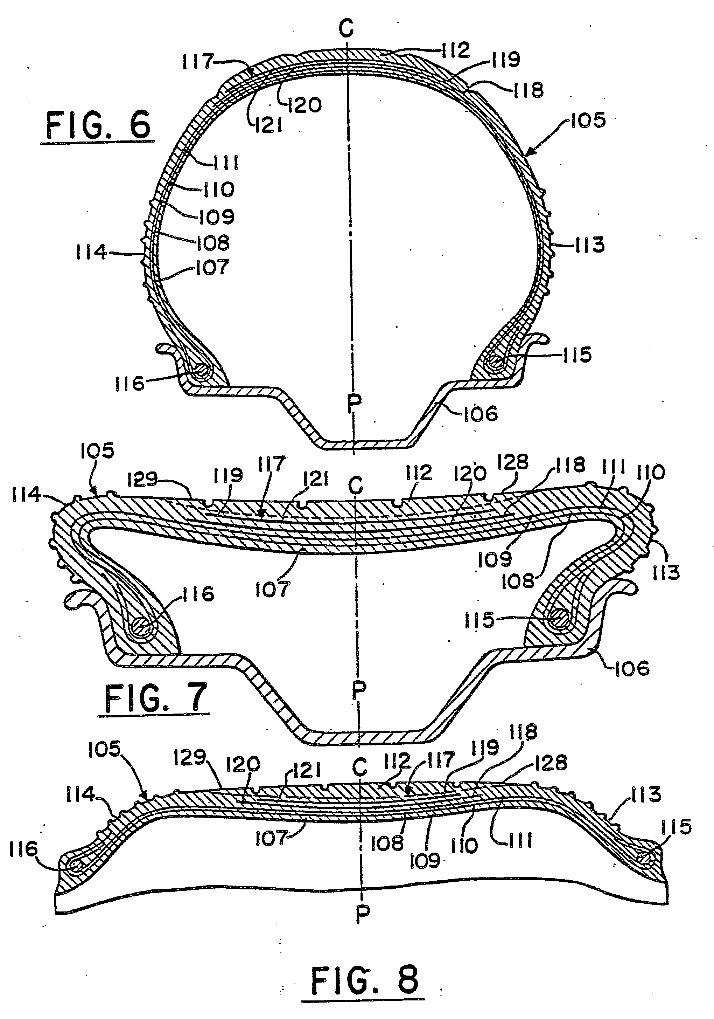

The composite cord 20 of the invention is particularly well suited for use in a radial spare tire, illustrated in Fig. 6, wherein there is shown an expandable, square radial tire 105 mounted on a wheel rim 106 in the inflated extended condition. The spare radial tire 105 essentially comprises a fluied impervious innerliner 107 disposed within a plurality of carcass plies 108, 109 which are reinforced with parallel cords 110, 111; a tread 112 and pair of sidewalls 113, 114 surrounding the carcass plies 108, 109 and terminating at a pair of annular inextensible cable beads 115, 116 comprising cabled wires. A belt structure 117, consisting of a pair of superimposed belt plies 118, 119 is interposed between the tread 12 and radially outermost carcass ply 109.

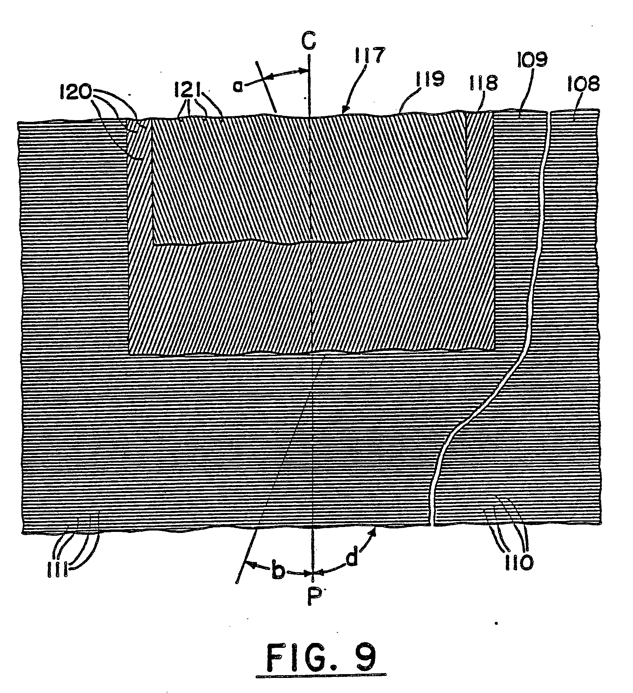

As shown in Fig. 9, the belt plies 118, 119 are reinforced with parallel cords 120, 121 which cross and extend in opposite directions from a plane CP containing the mid-circumferential centerline of the tread 112. The reinforcement cords 120, 121 of the belt structure 117 are disposed at angles a and b in the broad range of 0°—30° and preferably the narrower range of 10°—25°, measured relative to the centerplane CP when the tire is vulcanzied and deflated. The reinforcement cords 110, 111 of the carcass plies 108, 109 are radially oriented between the tire beads 115, 116, i.e., they are disposed at angles d in the range of 75°—90° measured relative to the centerplane. The rubber material of the carcass plies 108, 109 and belt plies 118, 119 is preferably a soft, low modulus compound having a modulus of elasticity smaller than 15 MPa (Mega Pascal) or 150 kp/cm² and preferably smaller than 10 MPa or 100 kp/cm² at 100 percent elongation.

The reinforcement cords 110, 111 of the carcass plies 108, 109 and 120, 121 of the belt structure 117 have the same structure as composite cords 20 illustrated as best seen in Fig. 2, each characterized by having a relatively high modulus of elasticity during the processing of the cord and the building of the tire. After the cords are subjected to vulcanization temperatures, they develop a low modulus of elasticity and are highly elongatable up to a predetermined length when they again develop a high modulus of elasticity and have a high resistance to elongation. The core 21 of cord 20 provides the cord strength to maintain the inextensible yarn 22, 23 in helical relation during any processing of the cord such as dipping, calendering, or building of the tire 5.

The expandable spare radial tire 105 may be built by placing the aforementioned components 107—121 on a conventional cylindrical tire building drum, to build an unvulcanized tire 105 which is axially smaller than normal. The unvulcanized tire 105 is then shaped, molded and vulcanized in the radially smaller than normal operating configuration illustrated in Fig. 8 where the tread 112 and upper sidewalls 128, 129 are generally cylindrical and the remaining, major portions of the sidewalls 113, 114 diverge from the tread 112 in directions away from the centerplane CP of the tire 105. Alternatively, the unvulcanized tire 105 can be molded and vulcanized in the deflated configuration with the sidewalls 128, 129 generally U-shaped as illustrated in Fig. 7.

The vulcanized spare tire 105 is then mounted on the wheel rim 106 as best seen in Fig. 7, where the outer diameter of the tire is adjacent the wheel rim 106. After vulcanization the core 21 of each of the cords 110, 111, 120 and 121 has a reduction in tensile strength of from 10 kilograms to zero or a negligible amount and consequently the modulus of elasticity of the cords is greatly reduced. This permits stretching out of the yarns 22, 23 so that upon inflation with air, the spare tire 105 stretches toroidally to a regularly sized tire which the spare tire 105 is designed to replace. The cords 110, 111, 120 and 121 develop a high modulus of elasticity when the yarns 26, 27 are stretched out a predetermined amount at which point the tire 105 is expanded to the size of a regular tire. The cords 110, 111, 120 and 121 therefore provide the necessary reinforcement for the inflated expanded tire.

It should be apparent from the above description that during vulcanization, the core 21 degrades and the elongation barrier A—B of Fig. 4 disappears. Therefore, after vulcanization, the tire 105 is easily expanded to its normally inflated and running condition as the yarns 22, 23 are readily elongated and twist into twisted reinforcing cords.

Thus, there has been described an expandable spare radial tire when, upon inflation with air, is stretchable from a deflated storage position on the wheel rim to an expanded condition where the spare tire resembles, in size, the tire it is replacing on the automobile.

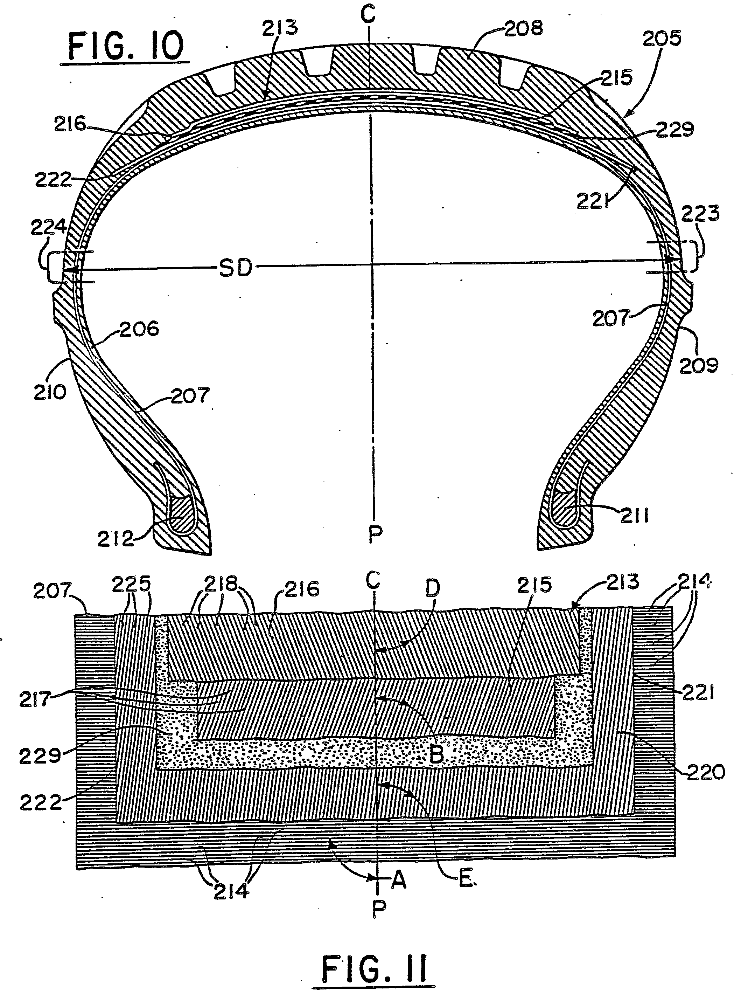

The composite cord 20 can also be utilized in the carcass overlay as shown in Fig. 10. With reference to Fig. 10, there is shown a tire 205 having a carcass overlay 218 made from the composite cords 20. The tire essentially comprises: a fluid impervious innerliner 206; at least one carcass ply 207 surrounding the innerliner 206; a tread 208 and pair of sidewalls 209, 210 surrounding the carcass ply 207 and terminating at a pair of annular, inextensible beads 211, 212; and a belt structure 213 interposed between the carcass ply 207 and tread 208.

The carcass ply 207 (Fig. 10) is reinforced with parallel cords 214 which are radially oriented, i.e. disposed at angles A in the range of from 75 to 90 degrees measured in relation to a plane CP containing the mid-circumferential centerline of the tread 208. The reinforcement cords 214 of the carcass ply 207 are composed of any suitable material, e.g., rayon, polyester, glass fibers, aramid, or metal.

The belt structure 213 (Fig. 10) comprises two belt plies 215, 216 which are in superimposed relation and reinforced, respectively, with parallel cords 217, 218 that are disposed at angles B,D greater than 15 degrees and preferably in the range of from 15 to 30 degrees measured from the centerplane. The reinforcement cords 217, 218 of the belt plies 215, 216 extend in different directions from the centerplane, although the cord angles of the reinforcement cords 217, 218 are generally the same in this embodiment and are both around 20 degrees. The reinforcement cords 217, 218 of the belt structure 213 are inextensible and composed of any suitable material such as aramid, glass, or metal, e.g. preferably brass-coated steel wire.

A belt underlay, or carcass overlay 220 is interposed between the belt structure 213 and carcass ply 207. The carcass overlay 220 is adjacent to the carcass ply 207 and has lateral marginal edges 221, 222 which extend beyond the belt structure 213 into the sidewalls 209, 210 of the tire 205, but terminate short of the maximum flex stones, or areas 223, 224 of the sidewalls 209, 210. The maximum flex zones 223, 224 are normally at the thinnest sections of the sidewalls 209, 210 of the tire 205, such sections usually being at about the maximum width or section diameter *SD* of the tire 205. The carcass overlay 220 (Fig. 10) consists of a single ply which is reinforced with parallel cords 225 that extend substantially circumferentially of the tire 205, i.e., at cord angles E in the range of from 0 to 13 degrees relative to the centerplane. The carcass overlay 220 has no effect on ply steer, i.e., the tendency of the tire construction to move the tire in a lateral direction, when the reinforcement cords 225 thereof are at very low angles of about zero degrees. The carcass overlay 220 has a decided effect upon the reduction of ply steer when the reinforcement cords 225 are disposed at angles of 4 degrees or more, and preferably around 8 degrees which seems to be the optimum cord angle for eliminating ply steer without seriously affecting the restrictive effect of the low angle reinforcement cords 225. Thus, the preferred cord angles of the reinforcement cords 225 are in the more selective range of from 4 to 13 degrees relative to the centerplane. The reinforcement cords 225 of the carcass overlay 220 extend in the same general direction from the centerplane as do the reinforcement cords 217 of the nearest belt ply 215.

The tire 205 is built by flat building a band of the carcass 207 and the carcass overlay 220 by wrapping the carcass ply 202 and the overlay 220 successively around a cylindrical tire building drum. This band, when removed from the drum has a cylindrical shape wherein the reinforcement cords 225 of the carcass overlay 220 are elongatable in corresponding relation to the blow-up ratio of the tire. This band is then shaped to a toroidal configuration for receipt of the belt structure 213, whereafter the tire 205 is molded and vulcanized. The reinforcement cords 225 of the carcass overlay 220 are substantially inextensible, when the band is fully shaped in the toroidal configuration and when the tire 205 is completely molded and vulcanized.

An appropriate cord 225 for the reinforcement of the carcass overlay 220 is of the composite cord 20 type illustrated in Fig. 2 and described hereinafter. The cord 225 is comprised of 4 yarns which are wound continuously at 5.5 turns per centimeter around a 0.5 millimeter diameter cotton core of 24,5 N (2.5 kilograms) tensile at break, each of the yarns being composed of filaments of nylon twisted together at a rate of 5 turns per centimeter to form a yarn of 93 tex (840 denier) the overall cord diameter being 1.2 millimeters. Another example of a reinforcement cord 225 is one having a 0.5 millimeter cotton core with a spiral wrapping of 2 × 166 tex (2 × 1500 denier) aramid turns at 6 turns per centimeter, the overall cord diameter being 1.2 millimeters.

A cushion 229, composed of a separate layer of soft, highly resilient, rubber material is, preferably, positioned between the carcass overlay 220 and nearest belt ply 215. The rubber material of the cushion 229 should have an elasticity, defined at 100 percent elongation, which is at least 100 grams per square millimeter less than that of the rubber material of the carcass overlay 220 and nearest belt ply 215.

It has been found from the typical stress-strain plots of the cords that a large variety of passenger tire sizes with blow-up ratios in the range from 155—195 percent can be made by using a cord of the present invention with elongation in the range of 70—90 percent. This is, therefore, a preferred range of elongatability for this particular type of tire with the aforementioned blow-up ratio. It will be obvious that without leaving the scope of this invention, other such preferred ranges can be easily found by one skilled in the art for other tire sizes with other blow-up ratios.

Thus, there has been described a radial tire having a two-ply belt structure in combination with a special carcass overlay for achieving highly improved high-speed characteristics. Further, a resilient cushion of rubber can be provided between the carcass overlay and belt structure to provide an uncoupling action between these two components and to facilitate reorientation of the cords during the molding and vulcanization of the tire. Any of the aforementioned cord angles are in relation to a fully molded and vulcanized tire which is uninflated.

Thus, it can be appreciated that all of the reinforcement cords used in rubber articles, e.g. tires, can be of the composite type, as described or in individual components of the tire, such as the belt, structure, carcass structure or carcass overlay.

Thus, there has been described various tire constructions that are reinforced with composite cords composed of substantially inextensible yarns which are spirally wrapped around a core of polyethylene or polypropylene that loses its tensile strength during the molding and vulcanization process, thereby allowing elongation of the composite cords as the individual yarns stretch out.

It will be clear that the cord of the present invention may also be used in articles other than tires without departing from the scope of the present invention.

## Claims

1. A composite cord (20, 110, 111, 120, 121) for reinforcing an elastomeric article (5, 105, 205), said cord comprising at least one high tenacity substantially inextensible yarn (21, 23) spirally wrapped around a core (21), said core including at least one filament which can resist and recover from tension forces on the cord at room temperatures during the first part of the processing of said cord and said elastomeric article and said complete composite cord having a reduction in initial tenacity during vulcanization of the rubber enclosed in the elastomeric article to permit stretching out of the yarn (22, 23) to its full extent to allow elongation of the elastomeric article to a predetermined amount, said yarns being maintained in a helical relationship during the first part of the processing, characterized in that the core (21) of said cord is composed of a polymer of the group consisting of polyolefines having at room temperature an elastic limit of at least 24,5 Newton (2,5 kilograms) and a modulus of elasticity greater than 2,2 Newton/tex (25 gr/denier) and is degradable at temperatures normally used to vulcanize rubber and at such temperatures the modulus of elasticity of said core is reduced to a low value and remains at this reduced value when the cord is cooled to lower temperatures.

2. The composite cord according to claim 1 characterized in that said polyolefines include polyethylene and polypropylene.

3. The composite cord according to claim 1 or 2 characterized in that the core (21) of said cord is a monofilament.

4. The composite cord according to any of the claims 1 to 3, characterized in that the core (21) of said cord has an elastic limit of at least 0,13 Newton/tex (1.5 gr/denier) being subjected to said temperatures normally used during vulcanization.

5. The composite cord according to claim 4 characterized in that said temperatures normally used during vulcanization are in the range of 120°C to 150°C.

6. The composite cord according to any of claims 1 to 5 characterized in that the core of said cord has said reduction in tenacity at a temperature in the range of from 130°C to 140°C.

7. The composite cord according to any of cliams 1 to 6 characterized in that said yarn of said cord is composed of at least one twisted strand which is composed of filaments of reinforcing material.

8. The composite cord according to claim 7 characterized in that said strand has a linear weight in the range of from 89 to 165 tex (800 to 1500 denier).

9. The composite cord according to claim 7 or 8 characterized in that said yarn of said cord is composed of said strand cabled together with other strands.

10. The composite cord according to any of claims 7 to 9 characterized in that a second substantially inextensible yarn of high tenacity is spirally wrapped around said core of said cord in opposed relation to said first yarn so that after said reduction in tenacity of said core and elongation of said cord said first and second yarns will twist together.

11. The composite cord according to any of claims 7 to 10 characterized in that said yarn of said cord is wound around the core in the range of from 3 to 7 turns per centimeter and said cord is elongatable between 50 percent and 100 percent.

12. Stretchable tire (105) comprising:
a) at least one carcass ply (108, 109), the cords of said carcass ply being disposed at angles in the range of from 75° to 90° relative to a plane (CP) containing the mid-circumferential centerline of the tread of the tire;
b) a fluid impervious innerliner (107) disposed within said carcass ply;
c) a ground-engaging tread portion (112);
d) a pair of sidewalls (113, 114) surrounding said carcass ply and terminating at a pair of annular beads (115, 116);
e) at least one belt ply (118, 119) interposed between said carcass ply in said tread for annularly reinforcing the tire, said cords of said belt ply being disposed at angles in the range from 0° to 30°, measured from said centerplane, characterized in that the cords of said carcass ply and said belt ply are composed of composite cords according to any of the preceding claims.

13. The tire according to claim 12 characterized in that said belt ply and said carcass ply are highly elongatable in an amount from 50 to 100% to allow for circumferential expansion of the tread upon inflation of the tire.

14. The tire according to claims 12 or 13 characterized in that said cords of said carcass ply and belt ply are embedded in rubber material having a modulus of elasticity less than 15 MPa (150 kg/cm²) at 100 percent elongation.

15. The tire according to any of claims 12 to 14 characterized in that the belt structure consists of two belt plies with said composite cords.

16. The tire according to any of claims 12 to 15 characterized in that said sidewalls (113, 114) are each generally U-shaped.

17. A pneumatic tire (205) having
a) at least one carcass ply (207) reinforced with cords which are radially oriented between beads of the tire;

b) a tread (108) and a pair of sidewalls (209) surrounding the carcass ply and terminating at a pair of annular inextensible beads (211, 212);

c) a belt structure (213) interposed between the tread and carcass ply for annularly reinforcing the tire, the belt structure comprising a pair of belt plies in superimposed relation, each of the belt plies being reinforced by parallel cords disposed at angles greater than 15° relative to a plane containing the mid-circumferential centerline of the tread, the reinforcing cords of the plies extending in different directions from said plane; and

d) a carcass overlay (218) disposed between the carcass ply and belt structure, the carcass overlay consisting of a single ply with opposing marginal edges which extend laterally beyond the belt structure, the carcass overlay being reinforced with parallel cords which are disposed at angles in the range of from 0° to 13° relative to said plane, characterized in that said cords of said carcass overlay comprise composite cords according to any of claims 1 to 11.

18. A method of making a highly stretchable radial tire (105) for use as an uninflated spare tire comprising:

a) building an axially much smaller than normal unvulcanized, cylindrically shaped radial tire of highly stretchable components of an innerliner, at least one carcass ply with reinforcing cords, a tread, a pair of sidewalls, a pair of cable beads, and a belt structure comprised of at least one belt ply with reinforcing cords;

b) molding and vulcanizing the tire in a radially much smaller than normal configuration with the components in an unstretched position where

(I) the tread is generally cylindrical

(II) major portions of the sidewalls diverge from the tread in the direction away from the centerplane of the tire, and

(III) the reinforcing cords of the carcass ply and belt structure are highly elongatable;

c) characterized in that each of said cords (20, 110, 111, 120, 121) comprise at least one high tenacity substantially inextensible yarns (21, 23) spirally wrapped around a core (21), said core including at least one filament which can resist and recover from tension forces on the cord at room temperatures during the first part of the processing of said cord and elastomeric article and said complete cord having a reduction of initial tenacity during vulcanization of the rubber enclosed in elastomeric article to permit stretching out of the yarn (22, 23) to its full extent to allow elongation of the elastomeric article to a predetermined amount, said yarns being maintained in a helical relationship during the first part of the processing, said core (21) of said cord is composed of a polymer of the group consisting of polyolefines having at room temperature an elastic limit of at least 24,5 Newton (2.5 kg) and a modulus of elasticity greater than 2,2 Newton/tex (25 gr/denier) and is degradable at temperatures normally used to vulcanize rubber and at such temperatures the modulus of said core is reduced to a low value and remains at this reduced value when the cord is cooled to lower temperatures.

**Patentansprüche**

1. Verbundkord zur Verstärkung eines Gegenstandes aus einem elastomeren Material, der wenigstens ein im wesentlichen nicht dehnbares Garn hoher Festigkeit aufweist, welches spiralförmig um einen Kern gewickelt ist, welcher wenigstens einen Faden aufweist, welcher Zugkräften, die auf den Kord bei Zimmertemperatur während der ersten Stufe der Verarbeitung des Kords und des Gegenstandes aus elastomeren Material ausgeübt werden, standhalten und sich von diesen erholen kann, wobei der vollständige Verbundkord während der Vulkanisierung des Gummis, der in dem Gegenstand aus elastomerem Material enthalten ist, eine Abnahme der Anfangsfestigkeit aufweist, damit das Garn aus sein volles Ausmass ausgestreckt werden kann, so dass eine Dehnung des Gegenstandes aus elastomerem Material um ein vorbestimmtes Mass ermöglicht wird und wobei die Garne während der ersten Verarbeitungsstufe in ihrer aufgewickelten Lage verbleiben, dadurch gekennzeichnet, dass der Kern (21) des Kords (20, 110, 111, 120, 121) aus einem Polymer der Gruppe besteht, die sich aus Polyolefinen zusammensetzt, die bei Zimmertemperatur eine Elastizitätsgrenze von wenigstens 24,5 Newton und einen Elastizitätsmodul grösser als 225 gr/tex aufweisen und die bei den Temperaturen abbaubar sind, die normalerweise zum Vulkanisieren von Gummi angewendet werden und dass bei diesen Temperaturen der Elastizitätsmodul des Kerns (21) auf einen niedrigeren Wert herabgesetzt wird und auf diesem verminderten Wert verbleibt, wenn der Kord auf niedrigere Temperaturen abgekühlt wird.

2. Verbundkord nach Anspruch 1, dadurch gekennzeichnet, dass die Polyolefine Polyethylen und Polypropylen umfassen.

3. Verbundkord nach Anspruch 1 oder 2, dadurch gekennzeichnet, dass der Kern (21) des Kords ein Einfaden ist.

4. Verbundkord nach einem der Ansprüche 1 bis 3, dadurch gekennzeichnet, dass der Kern (21) des Kords eine Elastizitätsgrenze von wenigstens 0,13 Newton/tex aufweist, ehe er den Temperaturen ausgesetzt wird, die üblicherweise bei der Vulkanisierung verwendet werden.

5. Verbundkord nach Anspruch 4, dadurch gekennzeichnet, dass die Temperaturen, die normalerweise während der Vulkanisierung angewendet werden im Bereich von 120°C bis 150°C liegen.

6. Verbundkord nach einem der Ansprüche 1 bis 5, dadurch gekennzeichnet, dass der Kern

(21) des Kords die Abnahme der Festigkeit bei einer Temperatur im Bereich von 130°C bis 140°C aufweist.

7. Verbundkord nach einem der Ansprüche 1 bis 6, dadurch gekennzeichnet, dass das Garn (21, 23) des Kords aus wenigstens einem gezwirnten Garn besteht, welches aus Fäden aus Verstärkungsmaterial zusammengesetzt ist.

8. Verbundkord nach Anspruch 7, dadurch gekennzeichnet, dass das Garn ein Lineargewicht im Bereich von 89 bis 165 tex aufweist.

9. Verbundkord nach Anspruch 7 oder 8, dadurch gekennzeichnet, dass das Garn des Kords aus gezwirntem Strang besteht, der mit anderen Strängen verdreht oder verzwirnt ist.

10. Verbundkord nach einem der Ansprüche 7 bis 9, dadurch gekennzeichnet, dass ein zweites, im wesentliches nicht ausdehnbares Garn hoher Festigkeit spiralförmig um den Kern des Kords, entgegengesetzt zum ersten Garn ausgewickelt ist, so dass nach der Verminderung der Festigkeit des Kerns und der Ausdehnung des Kords die ersten und zweiten Garne sich miteinander verzwirnen oder verdrehen.

11. Verbundkord nach einem der Ansprüche 7 bis 10, dadurch gekennzeichnet, dass das Garn des Kords um den Kern mit etwa 3 bis 7 Windungen pro Zentimeter gewickelt ist und dass der Kord zwischen 50% und 100% dehnbar ist.

12. Dehnbarer Reifen mit wenigsten einer Karkassenlage deren Korde unter Winkeln im Bereich von 75° bis 90° relativ zu der Ebene angeordnet sind, welche die Mittelumfangs-Mittellinie der Lauffläche des Reifens enthält, einer fluiddichten Innenauskleidung, die innerhalb der Karkassenlage angeordnet ist, einer auf dem Boden laufenden Lauffläche, einem Paar Seitenwände, welche die Karkassenlage umgeben und an einem Paar ringförmiger Wülste enden und wenigstens einem Zwischenbau, der zwischen der Karkassenlage und der Lauffläche angeordnet ist, um ringförmig den Reifen zu verstärken, wobei die Korde dieses Zwischenbaus unter Winkeln im Bereich von 0° bis 30° gemessen von dieser Mittelebene aus, angeordnet sind, dadurch gekennzeichnet, dass die Korde der Karkassenlager (108, 109) und des Unterbaus (118, 119) aus Verbundkorden nach einem der vorhergehenden Ansprüche bestehen.

13. Reifen nach Anspruch 12, dadurch gekennzeichnet, dass der Unterbau (118, 119) und die Karkassenlage (108, 109) in einer Grösse von 50% bis 100% in hohem Masse ausdehnbar sind um eine Umfangsausdehnung der Lauffläche beim Aufblasen des Reifens zu ermöglichen.

14. Reifen nach Anspruch 12 oder 13, dadurch gekennzeichnet, dass die Korde der Karkassenlage (108, 109) und des Unterbaus (118, 119) in Gummimaterial eingebettet sind, welches einen Elastizitätsmodul von weniger als 15 MPa bei 100% Dehnung aufweist.

15. Reifen nach einem der Ansprüche 12 bis 14, dadurch gekennzeichnet, dass der Unterbau (108, 109) aus zwei Unterbaulagen mit Verbundkord besteht.

16. Reifen nach einem der Ansprüche 12 bis 15, dadurch gekennzeichnet, dass jede Seitenwand (113, 114) im allgemeinen U-förmig ist.

17. Luftreifen mit wenigstens einer Karkassenlage, die durch Korde verstärkt ist, welche radial zwischen den Wülsten des Reifen orientiert sind, einer Lauffläche und einem Paar Seitenwänden, welche die Karkassenlage umgeben und an einem Paar von ringförmigen, nicht ausdehnbaren Wülsten endet, einem Unterbau, der zwischen der Lauffläche und der Karkassenlage angeordnet ist, um ringförmig den Reifen zu verstärken, wobei dieser Unterbau aus einem Paar von Unterbaulagen, die übereinander liegen besteht und wobei jede Unterbaulage durch parallele Korde verstärkt ist, die unter Winkeln grösser als 15° relativ zu einer Ebene angeordnet sind, welche die Mittel-Umfangs-Mittellinie der Lauffläche enthält, wobei sich die Verstärkungskorde von dieser Ebene aus in verschiedene Richtungen erstrecken und mit einer Karkasse, die zwischen der Karkassenlage und den Unterbau angeordnet ist, wobei diese Karkasse aus einer einzigen Lage mit gegenüberliegenden Randkanten besteht, die sich seitlich über den Unterbau erstrecken, wobei diese Karkasse mit parallelem Kord verstärkt ist, die unter Winkeln im Bereich von 0° bis 30° relativ zu der besagten Ebene angeordnet sind, dadurch gekennzeichnet, dass die Korde dieser Karkasse (218) Verbundkorde nach einem der Ansprüche 1 bis 11 aufweisen.

18. Verfahren zur Herstellung eines hochausdehnbaren Radialreifens, der als nicht aufgeblasener Reservereifen verwendet wird, bei welchem ein axial viel schmaler als normal, unvulkanisierter, zylindrisch geformter Radialreifen aufgebaut wird und zwar aus hochausdehnbaren Komponenten, die eine Innenlage, wenigstens eine Karkassenlage mit Verstärkungskord, eine Lauffläche, ein Paar Seitenwände, ein Paar Kabelwülste und einen Unterbau umfassen, der aus wenigstens einer Unterbaulage mit verstärktem Kord besteht, dieser Reifen in radial viel kleinerer Konfiguration als normal mit den Komponenten in ungestrecktem Zustand geformt wird, wobei die Lauffläche im allgemeinen zylindrisch ist und die Hauptabschnitte der Seitenwandungen von der Lauffläche in einer Richtung von der Mittelebene des Reifens fortdivergieren und der Verstärkungskord der Karkassenlage und des Unterbaus stark ausdehnbar sind, dadurch gekennzeichnet, dass jeder der Korde (20, 110, 111, 120, 121) wenigstens ein im wesentlichen nicht dehnbares Garn (21, 23) hoher Festigkeit aufweist, welches spiralförmig um einen Kern (21) gewickelt ist, welcher wenigstens einen Faden aufweist, welcher Zugkräften, die auf den Kord bei Zimmertemperatur während der ersten Stufe der Verarbeitung des Kordes und eines Gegenstandes aus elastomerem Material ausgeübt werden standhalten und sich von diesen erholen kann, wobei der vollständige Verbundkord während der Vulkanisierung des Gummis, der in dem Gegenstand aus elastomerem Material enthalten ist, eine Abnahme der Anfangsfestigkeit aufweist, damit das Garn (22, 23) auf sein volles Ausmass ausgestreckt werden kann, wobei die Garne während der ersten Verarbeitungsstufe in ihrer aufgewickelten Lage verbleiben und dass der Kern (21) des Kordes aus einem Polymer der Gruppe besteht, die sich aus Polyolefinen zusammensetzt, die bei Zimmertemperatur eine Elastizitätsgrenze von wenigstens 24,5 Newton und einen Elastizitätsmodul. grösser als 2,2 Newton/tex aufweisen und die bei den Temperaturen abbaubar sind, die normalerweise zum Vulkanisieren von Gummi angewendent werden, und dass bei diesen Temperaturen der Elastizitätsmodul des Kerns (21) auf einen niedrigeren Wert herabgesetzt wird und auf diesem verminderten Wert verbleibt, wenn der Kord aus niedrigere Temperaturen abgekühlt wird.

**Revendications**

1. Câblé composite (20, 110, 111, 120, 121) en vue de renforcer un article élastomère (5, 105, 205), ce câblé comprenant au moins un fil pratiquement inextensible (22, 23) d'une haute ténacité enroulé en spiral autour d'une âme (21), cette dernière comportant au moins un filament pouvant résister à et se rétablir après avoir subi des forces de tension imposées au câblé à la température ambiante au cours de la première partie du traitement du câblé et de l'article élastomère, ce câblé composite complet ayant une ténacité initiale réduite au cours de la vulcanisation du caoutchouc que renferme l'article élastomère afin de pouvoir étirer le fil (22, 23) au maximum et permettre ainsi l'allongement de l'article élastomère à une valeur prédéterminée, ces fils étant maintenus dans une relation hélicoïdale au cours de la première partie du traitement, caractérisé en ce que l'âme (21) du câblé est constituée d'un polymère choisi parmi le groupe comprenant les polyoléfines ayant, à la température ambiante, une limite élastique d'au moins 24,5 newtons (2,5 kg) et un module d'élasticité supérieur à 225 g/tex (25 g/denier), cette âme étant dégradable aux températures normalement adoptées pour vulcaniser le caoutchouc tandis que, à ces températures, le module d'élasticité de cette âme est réduit à une faible valeur et reste à cette valeur réduite lorsque le câblé est refroidi à des températures inférieures.

2. Câblé composite suivant la revendication 1, caractérisé en ce que les polyoléfines sont le polyéthylène et le polypropylène.

3. Câblé composite suivant la revendication 1 ou 2, caractérisé en ce que l'âme (21) du câblé est un monofilament.

4, Câblé composite suivant l'une quelconque des revendications 1 à 3, caractérisé en ce que l'âme (21) du câblé a une limite élastique d'au moins 0,13 newton/tex (1,5 g/denier) avant de subir les températures normalement adoptées au cours de la vulcanisation.

5. Câblé composite suivant la revendication 4, caractérisé en ce que les températures normalement adoptées au cours de la vulcanisation se situent dans l'intervalle allant de 120 à 150°C.

6. Câblé composite suivant l'une quelconque des revendications 1 à 5, caractérisé en ce que l'âme du câblé présente la ténacité réduite précitée à une température se situant dans l'intervalle allant de 130 à 140°C.

7. Câblé composite suivant l'une quelconque des revendications 1 à 6, caractérisé en ce que le fil du câblé est constitué d'au moins un brin retordu, lui-même constitué de filaments d'une matière de renforcement.

8. Câblé composite suivant la revendication 7, caractérisé en ce que ce brin a un poids linéaire se situant dans l'intervalle allant de 89 à 165 tex (800 à 1.500 deniers).

9. Câblé composite suivant la revendication 7 ou 8, caractérisé en ce que le fil du câblé est constitué du brin précité câblé ensemble avec d'autres brins.

10. Câblé composite suivant l'une quelconque des revendications 7 à 9, caractérisé en ce qu'un deuxième fil pratiquement inextensible d'une haute ténacité est enroulé en spirale autour de l'âme du câblé dans une direction opposée par rapport à celle du premier file de telle sorte qu'après la réduction de ténacité de l'âme et allongement du câblé, ce premier et ce deuxième fil soient retordus ensemble.

11. Câblé composite suivant l'une quelconque des revendications 7 à 10, caractérisé en ce que le fil du câblé est enroulé autour de l'âme à raison de 3 à 7 spires par cm, tandis que le câblé peut subir un allongement se situant entre 50 et 100%.

12. Bandage pneumatique étirable (105) comprenant:

a) au moins un pli de carcasse (108, 109), les câblés de ce pli de carcasse étant disposés sous des angles se situant dans l'intervalle allant de 75 à 90° par rapport à un plan (CP) renfermant la ligne centrale circonférentielle médiane de la bande de roulement du bandage pneumatique;

b) une gomme intérieure (107) imperméable aux fluides et disposée à l'intérieur de ce pli de carcasse;

c) une bande de roulement (112) destinée à entrer en contact avec le sol;

d) deux flancs (113, 114) entourant ce pli de carcasse et se terminant dans deux bourrelets annulaires (115, 116);

e) au moins un pli de ceinture (118, 119) intercalé entre ce pli de carcasse et la bande de roulement en vue d'assurer un renforcement annulaire du bandage pneumatique, les câblés de ce pli de ceinture étant disposés sous des angles se situant dans l'intervalle allant de 0 à 30° mesuré à partir de ce plan central, caractérisé en ce que les câblés du pli de carcasse et du pli de ceinture sont des câblés composites suivant l'une quelconque des revendications précédentes.

13. Bandage pneumatique suivant la revendication 12, caractérisé en ce que le pli de ceinture et le pli de carcasse ont une haute aptitude à l'allongement se situant entre 50 et 100% afin de permettre l'expansion circonférentielle de la bande de roulement lors du gonflage du bandage pneumatique.

14. Bandage pneumatique suivant la revendication 12 ou 13, caractérisé en ce que les câblés du pli de carcasse et du pli de ceinture sont enrobés dans une matière caoutchouteuse ayant un module d'élasticité inférieur à 15 MPa (150 kg/cm²) à un allongement de 100%.

15. Bandage pneumatique suivant l'une quelconque des revendications 12 à 14, caractérisé en ce que la structure de ceinture est constituée de deux plis de ceinture comportant ces câblés composites.

16. Bandage pneumatique suivant l'une quelconque des revendications 12 à 15, caractérisé en ce que les flancs (113, 114) ont chacun une configuration générale en U.

17. Bandage pneumatique (205) comportant:

(a) au moins un pli de carcasse (207) renforcé par des câblés orientés radialement entre les bourrelets du bandage pneumatique;

(b) une bande de roulement (108) et deux flancs (209) entourant le pli de carcasse et se terminant dans deux bourrelets annulaires inextensibles (211, 212);

(c) une structure de ceinture (213) intercalée entre la bande de roulement et le pli de carcasse en vue d'assurer le renforcement annulaire du bandage pneumatique, cette structure de ceinture étant constituée de deux plis de ceinture superposés, chacun de ces plis de ceinture étant renforcé par des câblés parallèles disposés sous des angles supérieurs à 15° par rapport à un plan renfermant la ligne centrale circonférentielle médiane de la bande de roulement, les câblés de renforcement des plis s'étendant dans des directions différentes par rapport à ce plan; et

(d) un recouvrement de dessus de carcasse (218) disposé entre le pli de carcasse et la structure de ceinture, le recouvrement de dessus de carcasse étant constitué d'un seul pli comportant des bords marginaux opposés s'étendant latéralement au-delà de la structure de ceinture, le recouvrement de dessus de carcasse étant renforcé par des câblés parallèles disposés sous des angles se situant dans l'intervalle allant de 0 à 13° par rapport à ce plan, caractérisé en ce que les câblés du recouvrement de dessus de carcasse sont des câblés composites suivant l'une quelconque des revendications 1 à 11.

18. Procédé de fabrication d'un bandage pneumatique radial (105) d'une haute aptitude à l'étirage et destiné à être utilisé comme bandage pneumatique non gonflé de secours, ce procédé comprenant les étapes consistant à:

a) confectionner un bandage pneumatique radial de forme cylindrique, non vulcanisé et axialement beaucoup plus petit qu'un bandage pneumatique normal, ce bandage pneumatique radial étant constitué d'éléments d'une haute aptitude à l'étirage, à savoir une gomme intérieure, au moins un pli de carcasse comportant des câblés de renforcement, une bande de roulement, deux flancs, deux bourrelets constitués de câbles, ainsi qu'une structure de ceinture constituée d'au moins un pli de ceinture comportant des câblés de renforcement;

b) mouler et vulcaniser le bandage pneumatique en une configuration radialement beaucoup plus petite que la configuration normale, les différents éléments étant dans une position non étirée dans laquelle:

(I) la bande de roulement est généralement cylindrique,

(II) les parties principales des flancs divergent de la bande de roulement à l'écart du plan central du bandage pneumatique, et

(III) les câblés de renforcement du pli de carcasse et de la structure de ceinture ont une haute aptitude à l'allongement;

(c) caractérisé en ce que chacun des câblés (20, 110, 111, 120, 121) est constitué d'au moins un fil pratiquement inextensible (22, 23) d'une haute ténacité et enroulé en spirale autour d'une âme (21), cette dernière comportant au moins un filament pouvant résister à et se rétablir après avoir subi les forces de tension imposées au câblé à la température ambiante au cours de la première partie du traitement de ce câblé et de cet article élastomère, ce câblé complet ayant une ténacité initiale réduite au cours de la vulcanisation du caoutchouc que renferme l'article élastomère afin de pouvoir étirer le fil (22, 23) au maximum et permettre ainsi l'allongement de l'article élastomère à une valeur prédéterminée, ces fils étant maintenus dans une relation hélicoïdale au cours de la première partie du traitement, cette âme (21) du câblé étant constituée d'un polymère choisi parmi le groupe comprenant les polyoléfines ayant, à la température ambiante, une limite élastique d'au moins 24,5 newtons (2,5 kg) et un module d'élasticité supérieur à 2,2 newtons/tex (25 g/denier), cette âme étant dégradable aux températures normalement adoptées pour vulcaniser le caoutchouc et, à ces températures, le module de cette âme est réduit à une faible valeur et reste à cette valeur réduite lorsque le câblé est refroidi à des températures inférieures.

FIG. 1

FIG. 2

**0016114**

FIG. 3

FIG. 4

FIG. 5

2

FIG. 6

FIG. 7

FIG. 8

FIG. 9

FIG. 10

FIG. 11